# EUROPÄISCHE PATENTSCHRIFT

(11) **EP 3 259 622 B1**
(45) Veröffentlichungstag und Bekanntmachung des Hinweises auf die Patenterteilung: **09.01.2019**
(21) Anmeldenummer: 16705463.4
(22) Anmeldetag: 12.02.2016
(51) Int. Cl.: G01V 3/08

(54) **VERFAHREN UND VORRICHTUNG ZUM DETEKTIEREN EINES HINTER EINEM GEGENSTAND VERBORGENEN OBJEKTS**
METHOD AND DEVICE FOR DETECTING AN OBJECT HIDDEN BEHIND AN ARTICLE
PROCÉDÉ ET DISPOSITIF PERMETTANT DE DÉTECTER UN OBJET DISSIMULÉ DERRIÈRE UN AUTRE OBJET

(30) Priorität: 18.02.2015 DE 102015202880
(43) Veröffentlichungstag der Anmeldung: 27.12.2017
(73) Patentinhaber: Zircon Corporation, Campbell, CA 95008 (US)
(72) Erfinder: REIME, Gerd, 77815 Bühl (DE)
(74) Vertreter: Reinhardt, Harry
(86) Internationale Anmeldenummer: PCT/EP2016/052956
(87) Internationale Veröffentlichungsnummer: WO 2016/131711

(56) Entgegenhaltungen:
- DE-A1-102009 057 439
- US-A1- 2013 207 667
- US-B2- 7 106 072

## Beschreibung

Die Erfindung betrifft ein Verfahren und eine Messanordnung zum Detektieren eines hinter einem Gegenstand verborgenen Objekts.

### Stand der Technik

Das Detektieren von Objekten hinter Gegenständen ist bekannt. Entsprechende Verfahren und/oder Vorrichtungen können beispielsweise zum Auffinden von wertvollen Gegenständen zur Anwendung kommen, insbesondere als sogenannte Schatzsuchgeräte. Außerdem sind sogenannte Leitungssuchgeräte oder Balkensuchgeräte bekannt. Diese weisen zumindest einen Messaufnehmer auf, der mittels zumindest einer Wechselspannung in Wechselwirkung mit dem aufzufindenden Objekt treten kann. Der zumindest eine Messaufnehmer kann induktiv oder kapazitiv ausgebildet sein. Bei dem Gegenstand, hinter dem das Objekt verborgen ist, kann es sich beispielsweise um eine Verschalung in Form von Holz und/oder Gipskarton handeln, wobei das aufzufindende Objekt eine Abstützung darstellt, beispielsweise in Form eines Balkens. Bei solchen Anwendungen treten vergleichsweise schwache Signale auf. Zum Verarbeiten solcher vergleichsweise schwacher Signale ist es bekannt, diese zu verstärken und/oder mittels Regelungen zu kompensieren, wobei für eine Messauswertung nicht das eigentlich an dem Messaufnehmer auftretende Signal, sondern ein Stellsignal der kompensierenden Regelung ausgewertet wird. Bei dem Stellsignal kann es sich um eine eine Phase und Amplitude aufweisende Wechselspannung handeln, die mittels eines als Stellglied dienenden Pulsweitenmodulators erzeugt werden kann.

Es ist bekannt, ein solches Stellsignal in einem Phasenraum desselben auszuwerten. Aus der älteren Patentanmeldung DE 10 2013 226 887.4 ist beispielsweise eine induktive Sensoranordnung sowie ein Verfahren zur Detektion wenigstens eines Targets bekannt. Es ist vorgesehen, dass das Target eine sich entlang einer Messrichtung veränderliche Form oder Zusammensetzung aufweist und dass bei einer 4-Quadranten-Darstellung des Regelsignals der Winkel eines gedachten Vektors zu einer x-Achse eines xy-Koordinatensystems, der vom Ursprung des xy-Koordinatensystems, der den ausgeregelten Zustand eines Sendeempfangsspulensystems entspricht, zu einem Messpunkt führt, ein Maß für die Bewegung des Targets in einer Messrichtung ist und/oder der Betrag des gedachten Vektors ein Maß für einen Abstand des Targets von dem Sendekernspulensystem normal zur Messrichtung ist.

Ferner betrifft die ältere Patentanmeldung DE 10 2014 010 671.3, die die Priorität der älteren Patentanmeldung DE 10 2014 007 491.9 in Anspruch nimmt, ein Verfahren zur Ermittlung wenigstens eines physikalischen Parameters mittels einer Sensoreinheit, wobei das Ausgangssignal der Sensoreinheit im Wesentlichen auf eine Grundwelle einer Anregung reduziert wird, wobei wenigstens eine Pulsweitenmodulation je ein Korrektursignal mit variabler Pulsbreite und gegebenenfalls variabler Phase erzeugt und zu einem Ausgangssignal der Sensoreinheit addiert und dadurch das Ausgangssignal im gesamten Phasenraum zu Null regelt, wobei die Pulsbreite des Korrektursignals und/oder die Phase des Korrektursignals durch die Abweichung des Ausgangssignals von Null bestimmt wird.

Aus der dem Oberbegriff der unabhängigen Ansprüche zu Grunde liegenden DE 10 2009 057 439 A1 sind eine Vorrichtung und ein Verfahren zur fehlerfreien kapazitiven Messwerterfassung bekannt, wobei eine Ermittlung eines entfernungsabhängigen Messwerts einer Wirkung eines Gegenstandes beim Bewegen von Messaufnehmern entlang des Gegenstandes erfolgt. Ein Objekt wird in Abhängigkeit von der Änderung der Entfernungsabhängigkeit des Messwerts detektiert.

Die DE 695 10 447 T2 offenbart ein Gerät zum Erkennen der Position eines Pfostens in einer Trennwand.

Außerdem ist aus der internationalen Patentanmeldung WO 2012/104086 A2 ein Verfahren zur Ortung metallischer oder Metall enthaltender Objekte und Materialien bekannt.

### Aufgabe der Erfindung

Aufgabe der Erfindung ist es, ein Detektieren eines hinter einem Gegenstand verborgenen Objekts so zu verbessern, dass das Objekt möglichst unabhängig von einer relativen Lage der Vorrichtung zu dem Gegenstand, insbesondere einer Winkellage, erkannt werden kann, insbesondere auch dann, wenn die Vorrichtung zum Detektieren des Objekts manuell über den Gegenstand hinweggeführt wird.

Diese Aufgabe wird durch ein Verfahren zum Detektieren eines hinter einem Gegenstand verborgenen Objekts mit den Merkmalen des Anspruches 1 sowie durch eine Messanordnung mit den Merkmalen des Anspruches 14 gelöst.

Zum Detektieren des Objekts tritt vorteilhaft das Objekt mit den Messaufnehmern in eine grundsätzlich bekannte Wechselwirkung, die detektiert werden kann. Dabei ist systembedingt gegeben, dass die Messaufnehmer auch mit dem das Objekt verbergenden Gegenstand in Wechselwirkung treten. Eine geringfügige Änderung der Entfernung der Messaufnehmer zu dem Gegenstand bewirkt eine Änderung der Wechselwirkung. Dies kann beispielsweise bei handgeführten Geräten auch durch eine geringfügige Winkeländerung einer entsprechenden Vorrichtung relativ zu dem Gegenstand der Fall sein. Es wurde herausgefunden, dass die von der Entfernung der Messaufnehmer zu dem Gegenstand abhängige Wirkung ermittelbar ist. Das Ermitteln der abhängigen Wirkung erfolgt vorzugsweise durch eine Bewertung und/oder Analyse der grundsätzlich auftretenden Wechselwirkung. Unter einer abhängigen Wirkung kann eine Funktion, insbesondere eine mathematische Funktion, insbesondere eine Ursache-Wirkung-Beziehung zum Abbilden von Einflussgrößen auf Zielgrößen, verstanden werden. Vorteilhaft ist also die abhängige Wirkung als Funktion von der Entfernung beschreibbar. Weiter wurde herausgefunden, dass geringfügige Änderungen eines Winkels der Vorrichtung relativ zu dem Gegenstand, der Messfehler verursachen kann, dieser abhängigen Wirkung entsprechen, also der Funktion gehorchen. Außerdem wurde herausgefunden, dass die abhängige Wirkung sich ändert bzw. nicht mehr gilt, sobald das verborgene Objekt hinter dem Gegenstand anwesend ist. Es werden also insbesondere eine Entfernungsabhängigkeit der abhängigen Wirkung und eine Änderung dieser Entfernungsabhängigkeit ermittelt, wobei basierend auf dieser Änderung das Objekt detektierbar ist, da bei Anwesenheit des Objekts hinter dem Gegenstand die Entfernungsabhängigkeit nicht mehr gilt und/oder verändert ist. Es erfolgt insbesondere ein Ermitteln einer konkreten Entfernungsabhängigkeit der Wirkung des Gegenstands auf die Messaufnehmer sowie der Veränderung der ermittelten Entfernungsabhängigkeit durch die Anwesenheit des Objekts. Die Änderung kann auf beliebige Art und Weise ermittelt werden, beispielsweise in Form einer Maßzahl, eines Vergleichs, einer mathematischen Berechnung, scharfen oder unscharfen Logikkriterien, einer Änderung eines Systemverhaltens einer nur den Gegenstand oder den Gegenstand und das Objekt sowie eine Messanordnung aufweisenden Systems und/oder Ähnliches. Unter Ermitteln kann ein unmittelbares Ermitteln oder ein zeitlich vorgelagertes Ermitteln, Abspeichern und späteres Abrufen, gegebenenfalls nur das Abrufen, verstanden werden.

Durch das Ermitteln der abhängigen Wirkung kann zunächst eine entfernungsabhängige Funktion ermittelt werden. Insbesondere kann diese zunächst abgespeichert werden. Vorteilhaft kann davon ausgegangen werden, dass sich in Abwesenheit des Objekts Messwerte bzw. Werte eines entsprechenden Messsignals stets entsprechend der abhängigen Wirkung, also entsprechend der Funktion verhalten. Dadurch lässt sich ein entsprechendes Ausgangssignal hinsichtlich der abhängigen Wirkung bewerten. Dies kann vorteilhaft insbesondere so erfolgen, dass solange sich das Ausgangssignal entsprechend der Funktion verhält, darauf geschlossen werden kann, dass sich lediglich der Gegenstand in einem Erfassungsbereich der Messaufnehmer befindet. Dadurch können kleine Winkeländerungen und/oder damit verbundene Änderungen der Entfernung der Messaufnehmer relativ zu dem Gegenstand, die zwar zu einer Änderung des Messsignals führen, dennoch dahingehend bewertet werden, dass sich kein Objekt hinter dem Gegenstand befindet.

Beim eigentlichen Detektieren können nun die Messaufnehmer entlang des Gegenstandes, insbesondere entlang einer Oberfläche des Gegenstandes geführt, werden, insbesondere manuell geführt. Vorteilhaft kann dabei, sobald das verborgene Objekt sich in dem Erfassungsbereich der Messaufnehmer befindet, die Änderung der abhängigen Wirkung ermittelt werden. Insbesondere kann ein Vergleich der aktuell auftretenden Wirkung bzw. des aktuell auftretenden Messsignals mit der abhängigen Wirkung, also der Funktion erfolgen. Insbesondere kann dafür ein entsprechender Vergleich ausgewertet werden. Vorteilhaft kann so in Abhängigkeit von der Änderung der abhängigen Wirkung auf die Anwesenheit des Objekts hinter dem Gegenstand geschlossen werden. Vorteilhaft kann dies unabhängig von einer Entfernung des Gegenstands zu den Messaufnehmern erfolgen, zumindest in gewissen Grenzen, insbesondere solange sich der Gegenstand und/oder das Objekt in einem Messbereich der Messaufnehmer befinden. Es ist also vorteilhaft möglich, zunächst das Messsignal der Messaufnehmer hinsichtlich des Gegenstandes zu bewerten und dadurch eine Kalibrierung durchzuführen. In Kenntnis der abhängigen Wirkung, die der Gegenstand verursacht, kann vorteilhaft unabhängig von der Entfernung auf die Anwesenheit des Objekts geschlossen werden. Unter einer Änderung der abhängigen Wirkung kann also eine Änderung der entfernungsabhängigen Funktion verstanden werden, also nicht lediglich eine einfache Änderung eines zu oder zwischen zwei Zeitpunkten jeweils aktuell auftretenden Messsignals. Es kann also als zusätzliches Bewertungskriterium die abhängige Wirkung berücksichtigt werden, wobei auftretende Änderungen des Messsignals dann ignoriert werden können, falls ein erstes, insbesondere zu einem früheren Zeitpunkt ermitteltes, und ein weiteres beziehungsweise zweites, insbesondere aktuelles, Messsignal der abhängigen Wirkung gehorchen und/oder dieser zuzuordnen und/oder durch diese zu erklären sind. Im anderen Fall, kann auf das Objekt geschlossen werden, sobald ein geändertes, insbesondere das weitere, zweite und/oder aktuelle, Messsignal zusätzlich nicht mehr der abhängigen Wirkung entspricht beziehungsweise durch diese zu erklären ist. Für das entsprechende weitere, zweite und/oder aktuelle Messsignal gilt mithin die abhängige Wirkung nicht, da sich diese durch die Anwesenheit des Objekts geändert hat. Es ist denkbar, die abhängige Wirkung nur abschnittsweise zu ermitteln und gegebenenfalls, insbesondere durch Interpolation, zu vervollständigen,

Das Ermitteln der abhängigen Wirkung kann vorzugsweise im Vorfeld einer eigentlichen Messung für eine Vielzahl von Gegenständen erfolgen, wobei für die Vielzahl der Gegenstände beispielsweise eine Referenztabelle abgespeichert werden kann. Bei den Gegenständen kann es sich insbesondere um Beplankungen, insbesondere Beplankungen verschiedener Dicke und/oder verschiedenen Materials, insbesondere Holz, Karton, Gips, Putz, Zement und/oder Anderes handeln. Bei dem Objekt kann es sich um Stützen und/oder Träger, insbesondere aus verschiedenen Materialien und verschiedenen Stärken, insbesondere Holz, Metall, Faserverbundwerkstoffe und/oder Ähnliches handeln. Alternativ oder zusätzlich ist es denkbar, dass nach Inbetriebnahme einer entsprechenden Vorrichtung, also hier zu Beginn des Verfahrens, das Ermitteln der von der Entfernung zu dem Gegenstand abhängigen Wirkung erfolgt.

Zu Beginn eines Messens müssen vorteilhaft zunächst die Messaufnehmer so nahe an den Gegenstand herangeführt werden, dass sowohl der Gegenstand und das gegebenenfalls verborgene Objekt in dem Messbereich liegen. Vorteilhaft kann dieser zwangsläufig durchzuführende Vorgang dazu genutzt werden, zunächst die von der Entfernung der Messaufnehmer zu dem Gegenstand abhängige Wirkung zu ermitteln. Dadurch kann das Verfahren initialisiert werden. Nach dieser ersten Annäherung kann zunächst die abhängige Wirkung abgespeichert werden, um diese, sobald das verborgene Objekt in den Messbereich der Messaufnehmer gerät, mit der dann auftretenden Änderung der Wirkung zu vergleichen und daraus das verborgene Objekt zu detektieren bzw. als vorhanden anzuzeigen. Alternativ oder zusätzlich ist es auch denkbar, während einer Messung auftretende geringfügige Entfernungsänderungen auszunutzen, um die von der Entfernung der Messaufnehmer zu dem Gegenstand abhängige Wirkung zu ermitteln, zu validieren und/oder anzupassen. Dies erfolgt vorzugsweise in Messabschnitten, bei denen sich das Objekt nicht hinter dem Gegenstand befindet.

Unter einem Messaufnehmer kann ein beliebiges, mit einer Wechselspannung beaufschlagbares und mit dem Gegenstand und/oder dem Objekt in Wechselwirkung tretendes elektrisches Bauelement verstanden werden, insbesondere eine Spule oder eine Elektrode. Unter einer benachbarten Anordnung der Messaufnehmer kann verstanden werden, dass diese derart räumlich zueinander angeordnet sind, dass diese miteinander in Wechselwirkung treten können. Insbesondere kann darunter verstanden werden, dass diese zueinander eine Kapazität aufweisen und/oder bilden. Bevorzugt können die Messaufnehmer als Elektroden in einer Ebene angeordnet sein, insbesondere ineinander angeordnet, insbesondere konzentrisch zueinander in einer gemeinsamen Ebene liegend angeordnet. Bei einer konzentrischen Anordnung kann vorteilhaft eine von einer Bewegungsrichtung der Messaufnehmer relativ zu dem Gegenstand und/oder dem verborgenen Objekt unabhängige Messung erfolgen.

Bei einer Ausführungsform des Verfahrens sind ein Erzeugen einer Messwechselspannung, ein Filtern der Messwechselspannung mittels eines eine Phasenverschiebung bewirkenden Filters und dadurch ein Erzeugen der ersten Wechselspannung vorgesehen. Vorteilhaft kann die Messwechselspannung mittels einer gemeinsamen Wechselspannungsquelle erzeugt werden, wobei diese mittels des Filters so modifiziert bzw. gefiltert werden kann, dass die erste und die zweite Wechselspannung zur Verfügung stehen. Vorteilhaft kann dadurch eine Phasenverschiebung zwischen der ersten und zweiten Wechselspannung ermöglicht werden. Es wurde herausgefunden, dass während einer Messung, also während sich der Gegenstand und/oder das verborgene Objekt in dem Messbereich befinden, der Gegenstand und/oder das Objekt, der erste Messaufnehmer und der zweite Messaufnehmer derart in Wechselwirkung treten, dass sich die zwischen den Messaufnehmern auftretende Phasenverschiebung ändert. Vorteilhaft kann diese Änderung der Phasenverschiebung zum Ermitteln der abhängigen Wirkung und in Folge davon der Änderung dieser abhängigen Wirkung verwendet werden.

Eine weitere Ausführungsform des Verfahrens wird mit Anlegen der Messwechselspannung an einen Messspannungsteiler, Abgreifen der zweiten Wechselspannung an dem Messspannungsteiler zum Anlegen der zweiten Wechselspannung an den zweiten Messaufnehmer ausgeführt. Vorteilhaft entsteht dadurch zwischen dem Messspannungsteiler und dem zweiten Messaufnehmer eine Parallelschaltung, wobei vorteilhaft sich dadurch während des Detektierens des verborgenen Objekts eine Änderung einer Ausgangsspannung des Messspannungsteilers ergibt, die vorteilhaft zum Messen bzw. Detektieren des verborgenen Objekts weiterverarbeitet werden kann.

Bei einer weiteren Ausführungsform des Verfahrens weist das Filter im Vergleich zu dem Messspannungsteiler eine niedrige Impedanz auf. Während einer Messung, also während eines Detektierens des verborgenen Objekts, wirken die Messaufnehmer stärker aufeinander als in Abwesenheit des Objekts. Vorteilhaft kann durch die unterschiedliche Impedanz erreicht werden, dass die Spannung an dem Messspannungsteiler und/oder dadurch an dem zweiten Messaufnehmer durch den Einfluss des ersten Messaufnehmers stärker beeinflusst wird, da der erste Messaufnehmer über das die niedrigere Impedanz aufweisende Filter mit Spannung versorgt wird. Vorteilhaft kann dadurch eine empfindlichere Messung erfolgen. Vorteilhaft kann dadurch also über das Filter an dem ersten Messaufnehmer ein vergleichsweise niederimpedantes elektromagnetisches Feld, das sich vorteilhaft wenig beeinflussen lässt, erzeugt werden, das mittels der Wechselwirkung an dem Gegenstand und/oder dem Objekt dem zweiten Messaufnehmer und damit auch dem nachgeschalteten eine vergleichsweise hohe Impedanz aufweisenden Messspannungsteiler aufgeprägt werden kann. Vorteilhaft kann dadurch an dem Messspannungsteiler auch eine Phasenverschiebung in einem vergleichsweise großen Maß auftreten. An dem zweiten Messaufnehmer tritt also vorteilhaft ein vergleichsweise hochimpedantes elektromagnetisches Feld auf, das vorteilhaft im Falle des Detektierens des Objektes vergleichsweise stark beeinflussbar ist.

Eine weitere Ausführungsform des Verfahrens wird mit Erzeugen einer um 180° zu der Messwechselspannung phasenverschobenen Referenzwechselspannung und Anlegen der Referenzwechselspannung an eine den Messaufnehmern parallel geschaltete Referenzstrecke ausgeführt. Vorteilhaft kann über die Referenzstrecke eine zumindest teilweise Kompensation der Messaufnehmer erfolgen, insbesondere kann eine Kompensation während eines unbelasteten Zustandes erfolgen, also sofern sich der Gegenstand und/oder das Objekt nicht in dem Messbereich der Messaufnehmer befinden.

Bei einer weiteren Ausführungsform des Verfahrens ist der Referenzstrecke eine die Messaufnehmer, das Filter und den Messspannungsteiler aufweisende Messstrecke parallel geschaltet. Vorteilhaft kann die Referenzstrecke mit der Messstrecke verglichen werden. Insbesondere kann dies durch ein Addieren der Signale erfolgen. Vorteilhaft sind die Messwechselspannung und die Referenzwechselspannung phasenverschoben, sodass insbesondere eine zumindest teilweise Auslöschung der Ausgangssignale der Referenzstrecke und der Messstrecke erfolgen kann. Vorteilhaft ergibt sich also, insbesondere im unbelasteten Zustand, ein zu Null kompensiertes Signal. Vorteilhaft kann ein solches Signal mit vergleichsweise hohen Verstärkungen weiterverarbeitet werden. Vorteilhaft kann dadurch eine besonders genaue und/oder empfindliche Detektion des Objekts erfolgen.

Bei einer weiteren Ausführungsform des Verfahrens ist die Referenzstrecke analog zu der Messstrecke aufgebaut. Unter analog aufgebaut kann verstanden werden, dass diese ein identisches Übertragungsverhalten aufweisen und/oder identische elektrische Schaltelemente aufweisen und/oder elektrische Schaltelemente mit identischen elektrischen Kennwerten aufweisen. Insbesondere ist es denkbar, dass die Referenzstrecke elektrische Kennwerte, insbesondere Impedanzen und/oder Kapazitäten der Messaufnehmer, abbildet. Insbesondere ist es denkbar, dass dabei das Übertragungsverhalten der Referenzstrecke so eingestellt ist, dass dieses einem unbelasteten Zustand, also wenn sich das Objekt und/oder der Gegenstand nicht in dem Messbereich der Messaufnehmer befinden, entspricht. Alternativ ist es denkbar, die Referenzstrecke so auszulegen, dass deren Übertragungsverhalten dem Übertragungsverhalten der Messstrecke entspricht, sofern sich der Gegenstand in dem Messbereich befindet. Vorteilhaft kann dadurch die vorab beschriebene Kompensation zu dem Nullsignal in dem entsprechenden Messzustand der Messaufnehmer erfolgen. Unter einem Nullsignal kann ein Signal verstanden werden, das außer einem eventuell vorhandenen Rauschen keinerlei Informationen enthält. Insbesondere kann darunter verstanden werden, dass im Falle von Wechselspannungen keine Phase und auch keine Amplitude auftreten. Insbesondere kann in diesem Sinne auch eine Gleichspannung und/oder eine verrauschte Gleichspannung als Nullsignal verstanden werden. Als Sonderfall könnte ein 0 Volt aufweisendes Signal als Nullsignal verstanden werden.

Eine weitere Ausführungsform des Verfahrens wird mit Addieren eines Referenzausgangssignals der Referenzstrecke mit einem Primärmessausgangssignal der Messstrecke zu einem Sekundärmessausgangssignal ausgeführt. Vorteilhaft löschen sich das Referenzausgangssignal und das Primärmessausgangssignal aufgrund der Phasenverschiebung abhängig von dem Messzustand zumindest weitestgehend aus, im Idealfall zu dem vorab beschriebenen Nullsignal. Besonders vorteilhaft kann vorgesehen sein, dass aufgrund der Messung eventuell vorhandene Änderungen des Sekundärmessausgangssignals mittels eines Reglers zu dem Nullsignal geregelt werden. Vorteilhaft ist durch das Hinzunehmen der Referenzstrecke ein vergleichsweise größerer Regelbereich möglich. Alternativ ist es jedoch auch denkbar, auf die Referenzstrecke zu verzichten und eine entsprechende Kompensation zu dem Nullsignal lediglich mittels des Reglers vorzunehmen.

Eine weitere Ausführungsform des Verfahrens wird mit Vorgeben eines Sollwerts für das Sekundärmessausgangssignal, Beeinflussen des Sekundärmessausgangssignals in Abhängigkeit des Sollwerts mittels eines Stellsignals eines Reglers, Auswerten des Stellsignals zum Ermitteln der abhängigen Wirkung und der Änderung der abhängigen Wirkung ausgeführt. Vorteilhaft ist es dadurch möglich, nicht das Sekundärmessausgangssignal selbst, sondern lediglich das Stellsignal zum Detektieren des Objekts auszuwerten.

Der Regler wirkt vorzugsweise auf einen Ausgang der Messstrecke, wobei das Sekundärmessausgangssignal der Messstrecke als Störgröße eines den Regler aufweisenden Regelkreises aufgefasst werden kann. Der Regler ist also damit der Referenz- und der Messstrecke gleichermaßen vor- und nachgeschaltet. Als Regelgröße dient das Sekundärmessausgangssignal. Grundsätzlich ist es denkbar, das Sekundärmessausgangssignal auf eine beliebige Signalform zu regeln. Besonders vorteilhaft hat es sich jedoch herausgestellt, das Sekundärmessausgangssignal auf das vorab beschriebene Nullsignal zu regeln, wobei vorteilhaft mittels des Reglers das lediglich Rauschen aufweisende Signal erzeugt wird. Vorteilhaft ist es mittels einer entsprechenden Regelungsmessstrecke, die als Eingang des Reglers dient, besonders einfach möglich, in diesem Rauschen eine Veränderung festzustellen und entsprechend zu kompensieren. Vorteilhaft kann dadurch das Sekundärmessausgangssignal vergleichsweise hoch verstärkt werden. Vorteilhaft kann dadurch eine besonders empfindliche Detektion des Objekts erfolgen. Als Besonderheit wird also die eigentliche Messstrecke, insbesondere deren Ausgang, zur Regelstrecke, der vorzugsweise eine weitere, der Regelung zugrundeliegende Regelungsmessstrecke nachgeschaltet ist. Der Regler wirkt also vorzugsweise nicht auf die Messstrecke als solche, sondern stellt das Sekundärmessausgangssignal der Messstrecke durch Hinzuaddieren des Stellsignals.

Eine weitere Ausführungsform des Verfahrens wird mit Ermitteln eines von der Entfernung der Messaufnehmer zu dem Gegenstand abhängigen Verlaufs des Stellsignals durchgeführt. Vorteilhaft wird zunächst der von der Entfernung abhängige Verlauf ermittelt. Alternativ kann dieser gespeichert und/oder zwischengespeichert werden. Dies erfolgt in Form einer Funktion von der Entfernung. Vorteilhaft kann also über das Stellsignal und den abhängigen Verlauf darauf geschlossen werden, ob sich eine Änderung des Stellsignals durch eine gegebenenfalls versehentliche Änderung der Entfernung der Messaufnehmer zu dem Gegenstand oder aufgrund des Vorhandenseins des Objekts ergibt.

Eine weitere Ausführungsform des Verfahrens wird mit Ermitteln des Verlaufs in Form einer Vektoranalyse in einem Phasenraum des Stellsignals durchgeführt. In dem Phasenraum kann auf bekannte Art und Weise ein nicht zeitabhängiger Zustand des Stellsignals dargestellt werden. Dies kann insbesondere in vier Quadranten eines Achsenkreuzes erfolgen, wobei ein Punkt in dem Phasenraum jeweils einem nicht zeitabhängigen möglichen Zustand des Stellsignals entspricht. Vorteilhaft können zum Ermitteln des Verlaufes eine Vielzahl solcher Punkte ermittelt werden, die dann vorteilhaft grafisch in dem Phasenraum darstellbar sind. Die Vielzahl der Punkte kann vorteilhaft für einen bestimmten der Gegenstände eine Funktion des Stellsignales abhängig von der Entfernung darstellen. Vorteilhaft kann also zu einem beliebigen Zeitpunkt eine Momentaufnahme des Stellsignals mit dem ermittelten Verlauf verglichen werden. Dies erfolgt vorzugsweise in einem eingeschwungenen Zustand des Regelkreises beziehungsweise des Reglers. Es erfolgt also vorzugsweise zunächst ein Einschwingen des Regelkreises und/oder Reglers beziehungsweise ein Einstellen des Sollwerts. Sofern sich dabei eine Übereinstimmung und/oder eine ungefähre Übereinstimmung ergibt, kann unter der Voraussetzung, dass sich nur der Gegenstand in dem Messbereich der Messaufnehmer befindet, zumindest qualitativ auf die Entfernung geschlossen werden. Für die Messung ist jedoch eine andere Interpretation besonders vorteilhaft, nämlich die, dass das Stellsignal derart ausgewertet wird, dass eine Übereinstimmung des Stellsignals mit einem beliebigen Punkt des Verlaufs damit gleichgesetzt werden kann, dass sich das Objekt nicht im Messbereich der Messaufnehmer befindet, oder umgekehrt. Vorteilhaft kann diese Entscheidung unabhängig von einer tatsächlichen Entfernung der Messaufnehmer zu dem Gegenstand getroffen werden. Es ist also möglich, in Kenntnis des ermittelten Verlaufs auch bei versehentlichen Änderungen einer Entfernung der Messaufnehmer zu dem Gegenstand, beispielsweise verursacht durch manuelles Führen und/oder leichtes Verkippen, auf das Nichtvorhandensein des Objekts zu schließen. Im Gegenschluss ist es folglich auch möglich, sobald sich das Stellsignal dahingehend ändert, dass es nicht mehr mit dem Verlauf übereinstimmt und/oder zumindest nicht mehr ungefähr mit diesem übereinstimmt, auf das Vorhandensein des Objekts zu schließen.

Eine weitere Ausführungsform des Verfahrens wird mit Ermitteln des Verlaufs während eines Annäherns der Messaufnehmer an den Gegenstand vor einer Detektion des Objekts durchgeführt. Unter Ermitteln kann verstanden werden, dass die Punkte des Stellsignals in dem Phasenraum während des Annäherns ermittelt und gespeichert werden. Dies kann erfolgen, sobald der Gegenstand detektiert wird, also ein von einem unbelasteten Zustand abweichender Punkt in dem Phasenraum auftritt. Dies kann mehrfach erfolgen, sodass eine Punkteschar, die den Verlauf bildet, ermittelbar ist. Vorteilhaft kann der Verlauf so unmittelbar vor einer eigentlichen Messung, also dem Detektieren erfolgen. Alternativ ist es denkbar, den Verlauf nicht unmittelbar vor dem Detektieren des Objekts zu ermitteln, sondern in vorgelagerten Versuchen mit einer Vielzahl von Gegenständen, wobei für jeden einzelnen der Gegenstände ein entsprechender Verlauf in einer entsprechenden Tabelle abspeicherbar ist. Während der eigentlichen Messung kann dann zum Ermitteln des Verlaufs nicht eine Messung desselben, sondern lediglich eine Auswahl aus der vorab gespeicherten Tabelle verstanden werden. Auf diese Art und Weise kann ebenfalls für den aktuell vorliegenden Gegenstand der passende Verlauf des Stellsignals in dem Phasenraum ermittelt werden.

Eine weitere Ausführungsform des Verfahrens wird durchgeführt mit Ermitteln einer in dem Phasenraum von dem Verlauf oder einem Vektor begrenzten Fläche und Ermitteln der Änderung in Abhängigkeit von der Fläche. Es wurde erkannt, dass die abhängige Wirkung als ein das Messsignal im Phasenraum repräsentierender Vektor mit einem zumindest bereichsweise und/oder näherungsweise konstanten Phasenwinkel jedoch von der Entfernung abhängigen Betrag beschrieben werden kann. Zumindest kann angenommen werden, dass eine von einer versehentlichen Entfernungsänderung verursachte Winkeländerung klein ist gegenüber einer solchen, die durch die Anwesenheit des Objekts verursacht wird. Eine durch das Objekt verursachte Änderung des Vektors bewirkt also eine Winkeländerung. Da der Betrag des Vektors auch in Anwesenheit des Objekts ebenfalls zumindest überwiegend nur von der Entfernung abhängig ist, verursacht die Anwesenheit des Objekts im Wesentlichen lediglich eine Winkeländerung, aus der bereits auf das Objekt geschlossen werden könnte. Eine während der Messung auftretende Betragsänderung kann also ignoriert werden und auf eine eventuelle versehentliche Entfernungsänderung zurückgeführt werden. Zur Auswertung kann die Winkeländerung als solche und/oder eine von dem Vektor ohne Objekt und einem weiteren Vektor mit dem Objekt aufgespannte Fläche bewertet werden. Ebenso ist dies mit einer von dem Verlauf und einem weiteren Verlauf, der sich mit dem Objekt ergibt, aufgespannten Fläche möglich. So kann vorteilhaft eine, wenn auch kleine Winkeländerung, die durch eine Änderung der Entfernung herrührt, ebenfalls bei der Bewertung beziehungsweise bei der Detektion des Objekts außer Betracht gelassen werden.

Eine weitere Ausführungsform des Verfahrens wird durchgeführt mit Vorgeben eines Schwellwerts für den Verlauf, Vergleichen des Stellsignals mit dem Schwellwert und Detektieren des Objekts, sobald das Stellsignal so weit von dem Verlauf abweicht, dass der Schwellwert überschritten ist. Unter einem Schwellwert kann eine Entfernung von einem einzelnen Punkt und/oder von dem Verlauf verstanden werden. Insbesondere kann eine Umgebung um den Verlauf verstanden werden, wobei die Umgebung in dem Phasenraum darstellbar ist. Unter einem Überschreiten des Schwellwerts kann ein Verlassen der Umgebung verstanden werden. Vorteilhaft kann also mittels des Schwellwerts die Änderung der abhängigen Wirkung ermittelt werden. Unter der abhängigen Wirkung kann der Verlauf des Stellsignals verstanden werden. Vorteilhaft wurde erkannt, dass die Änderung der abhängigen Wirkung gleichbedeutend mit dem Verlassen der Umgebung und/oder dem Überschreiten des Schwellwertes ist. Alternativ kann auch unter der Änderung der abhängigen Wirkung verstanden werden, dass für das in dem Phasenraum analysierbare Stellsignal ein anderer funktioneller Zusammenhang gilt, falls sich das Objekt zusammen mit dem Gegenstand in dem Erfassungsbereich der Messaufnehmer befindet. Für die Messung kann vorteilhaft diese Änderung ermittelt werden. Alternativ oder zusätzlich ist es denkbar, dies als weitere Funktion des Stellsignals in dem Phasenraum zu beschreiben, wobei sich die Funktion gedanklich zunächst durch die Umgebung des Verlaufes hindurch und dann aus diesem hinaus bewegt. Grundsätzlich ist es zum Detektieren des Objekts jedoch lediglich erforderlich, die Änderung als solche zu ermitteln und darauf basierend das Objekt anzuzeigen bzw. zu detektieren. Insbesondere ist es denkbar, auch für den Gegenstand zusammen mit dem Objekt eine Vielzahl von funktionellen Zusammenhängen zu ermitteln und in einer Tabelle bereitzustellen, wobei die Änderung der Wirkung durch Zuordnung zu einem Wert in der Tabelle erfolgen kann, wobei dadurch das Objekt detektierbar ist.

Mit der Messanordnung kann vorteilhaft eine Detektion des Objektes im Wesentlichen unabhängig von der Entfernung des Gegenstands zu den Messaufnehmern erfolgen. Die Messanordnung ist insbesondere zum Durchführen eines vorab beschriebenen Verfahrens ausgelegt, eingerichtet, konstruiert und/oder programmiert. Insofern ergeben sich die vorab beschriebenen Vorteile.

Ein Ausführungsbeispiel der Messanordnung weist eine die Messaufnehmer aufweisende Schaltungsanordnung und einen der Analysevorrichtung vorgeschalteten sowie der Schaltungsanordnung eingangsseitig nachgeschalteten und ausgangsseitig parallel geschalteten Regler auf, wobei ein Regelverhalten des Reglers zum Ermitteln der Wirkung und/oder der Änderung der Wirkung mittels der Analysevorrichtung analysierbar ist. Vorteilhaft kann in Abhängigkeit des Regelverhaltens des Reglers die Wirkung und/oder die Änderung der Wirkung ermittelt werden. Insbesondere kann dies in einem Phasenraum erfolgen. Insbesondere durch ein Auswerten eines Stellsignals, wobei unter dem Regelverhalten ein Signalverlauf des Stellsignals verstanden werden kann.

Weitere Vorteile ergeben sich aus den Unteransprüchen und der nachfolgenden Beschreibung eines Ausführungsbeispiels.

### Kurzbeschreibung der Figuren

Im Folgenden wird die Erfindung anhand eines in den Figuren dargestellten Ausführungsbeispiels näher erläutert. Es zeigen:
- Fig. 1: ein Ablaufdiagramm eines Verfahrens zum Detektieren eines hinter einem Gegenstand verborgenen Objekts;
- Fig. 2: ein Blockschaltbild einer Messanordnung zum Durchführen des in Fig. 1 beschriebenen Verfahrens;
- Fig. 3: ein weiteres Blockschaltbild einer Schaltungsanordnung der in Fig. 2 gezeigten Messanordnung;
- Fig. 4: ein detaillierteres Ausführungsbeispiel der in Fig. 3 gezeigten Schaltungsanordnung;
- Fig. 5: Messaufnehmer der in Fig. 4 gezeigten Schaltungsanordnung während eines Annäherns an einen Gegenstand;
- Fig. 6: die in Fig. 5 gezeigten Messaufnehmer während eines Bewegens entlang des Gegenstandes zum Detektieren eines hinter dem Gegenstand verborgenen Objekts; und
- Fig. 7: eine grafische Darstellung einer abhängigen Wirkung und einer Änderung der abhängigen Wirkung in einem Phasenraum.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas anderes deutlich macht.

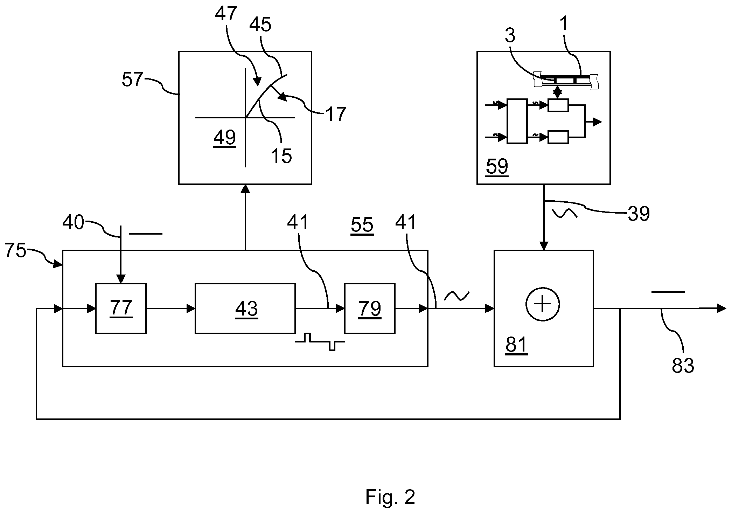

Fig. 2 zeigt ein Blockschaltbild einer Messanordnung 55 zum Detektieren eines hinter einem Gegenstand verborgenen Objekts. Die Messanordnung 55 weist eine Analysevorrichtung 57 auf. Mittels der Analysevorrichtung 57 kann eine Analyse, insbesondere eine Vektoranalyse, von mittels der Messanordnung 55 zum Detektieren des Objekts 3 generierten Signalen erfolgen. Außerdem weist die Messanordnung 55 eine Schaltungsanordnung 59 auf. Die Schaltungsanordnung 59 weist neben elektrischen bzw. elektronischen Bauelementen Messaufnehmer auf, die zum Detektieren des Objekts mit diesem in eine Wechselwirkung treten können. Die Schaltungsanordnung 59 liefert ein Sekundärmessausgangssignal 39. Das Sekundärmessausgangssignal 39 kann in Form einer Wechselspannung vorliegen. In einem unbelasteten bzw. kompensierten Zustand kann das Sekundärmessausgangssignal 39 als sogenanntes Nullsignal vorliegen, das insbesondere lediglich ein informationsfreies Rauschen aufweist.

Außerdem weist die Messanordnung 55 eine Regelungswirkkette 75 auf. Die Regelungswirkkette 75 weist einen Sollwertvergleich 77 zum Vergleich mit einem Sollwert 40 für das Sekundärmessausgangssignal 39 und dem Sollwertvergleich 77 nachgeschaltet einen Regler 43 auf. Der Regler 43 generiert ein Stellsignal 41. Das Stellsignal 41 kann insbesondere als Rechtecksignal einer Pulsweitenmodulation erzeugt werden. Optional ist dem Regler 43 ein Demodulator 79 nachgeschaltet. Der Demodulator 79 kann beispielsweise ein Glättungsfilter aufweisen. Insbesondere ist es denkbar, dass der Demodulator 79 das Stellsignal 41 auf eine Grundwelle reduziert. Insbesondere liegt das Stellsignal 41 als Dreipunktsignal vor. Alternativ oder zusätzlich ist es jedoch auch denkbar, dass der Regler 43 eine Vielzahl von Pulsweitenmodulatoren aufweist, sodass diese zu dem Stellsignal 41 addiert werden können, wobei dieses als Mehrpunktsignal vorliegen kann.

Der Regelungswirkkette 75 ist eine Additionsstelle 81 nachgeschaltet. Bei der Additionsstelle 81 kann es sich in einem einfachen Fall um eine elektrische Kontaktierung des Ausgangs der Regelungswirkkette 75 mit einem Ausgang der Schaltungsanordnung 59 handeln.

In einem bevorzugten Ausführungsbeispiel wird dem Sollwertvergleich 77 ein Sollwert 40 für das Sekundärmessausgangssignal 39 zugeführt, der einem Nullsignal entspricht. Dementsprechend stellt der Regler 43 das Stellsignal 41 so, dass dieses gegenphasig zu dem Sekundärmessausgangssignal 39 ist, sodass nach der Additionsstelle 81 beide zu dem vorzugsweisen Nullsignal addiert werden. Die Regelungswirkkette 75 kann eine nicht näher dargestellte und dem Sollwertvergleich 77 vorgeschaltete Regelungsmessstrecke zum Messen der sich als Ausgangsgröße der Additionsstelle 81 ergebenden Regelgröße 83 aufweisen. Vorteilhaft kann die Regelgröße 83 in einem ausgeregelten Zustand informationslos eingestellt werden, also gegebenenfalls außer einem eventuell vorhandenen Rauschen keinen Signalanteil aufweisen, sofern dies der Sollwert 40 vorgibt. Es ist in Fig. 2 ersichtlich, dass die zum eigentlichen Detektieren des Objekts vorgesehene Schaltungsanordnung 59 als Störgröße auf die Regelungswirkkette 75 wirkt. Zum Detektieren des Objekts 3 kann vorteilhaft das Stellsignal 41 oder ein von dem Stellsignal 41 abhängiges Signal an die Analysevorrichtung 57 weitergeleitet werden. Vorteilhaft kann mittels der Analysevorrichtung 57 mittels einer Analyse bzw. Auswertung des Stellsignals 41 oder des davon abhängigen Signals ermittelt werden, ob sich das Objekt hinter dem Gegenstand befindet oder nicht, d.h. um also die abhängige Wirkung 15 und/oder die Änderung 17 der abhängigen Wirkung zu ermitteln.

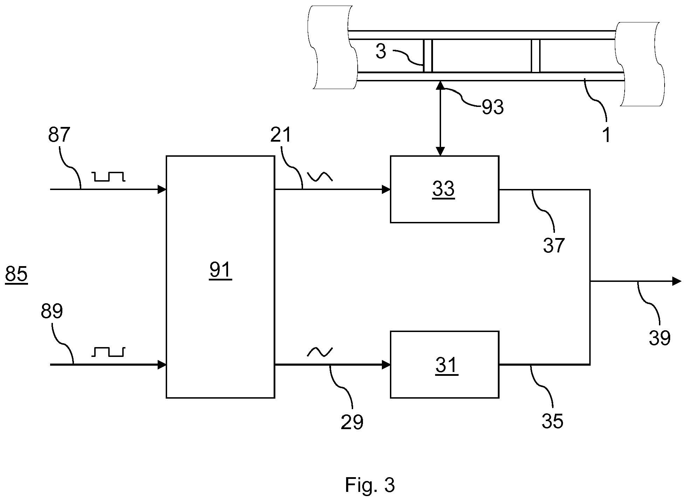

Fig. 3 zeigt ein detaillierteres Blockschaltbild der in Fig. 2 dargestellten Schaltungsanordnung 59. Der Schaltungsanordnung 59 wird ein von einem lediglich mit dem Bezugszeichen 85 symbolisierten Taktgenerator erzeugtes Taktsignal 87 zugeführt. Bei dem Taktsignal 87 kann es sich insbesondere um ein Rechtecksignal handeln. Außerdem wird der Schaltungsanordnung 59 ein weiteres Taktsignal 89 zugeführt. Das weitere Taktsignal 89 ist gegenphasig zu dem Taktsignal 87. Insbesondere kann das weitere Taktsignal 89 aus dem Taktsignal 87 durch eine entsprechende Schaltung erzeugt werden. Die Taktsignale 87 und 89 werden einer optionalen Vorschaltung 91 zugeführt. Die optionale Vorschaltung 91 kann insbesondere dazu vorgesehen sein, die Taktsignale 87 und 89 zu glätten und/oder eine Amplitude derselben zu verstärken und/oder eine Frequenz derselben zu verändern.

Als Ausgangsgrößen weist die Vorschaltung 91 eine Messwechselspannung 21, die insbesondere in Form des geglätteten und/oder verstärkten Taktsignals 87 vorliegt und eine Referenzwechselspannung 29, die insbesondere als geglättetes und/oder verstärktes weiteres Taktsignal 89 vorliegt, auf. Insbesondere weisen die Messwechselspannung 21 und die Referenzwechselspannung 29 nach der Glättung einen sinusförmigen oder zumindest weitestgehend sinusförmigen Verlauf auf.

Die Messwechselspannung 21 dient als Eingangsgröße einer Messstrecke 33. Die Referenzwechselspannung 29 dient als Eingangsgröße einer Referenzstrecke 31. Die Referenzstrecke 31 ist der Messstrecke 33 parallel geschaltet und insbesondere elektrisch so beschaltet und/oder aufgebaut, dass diese der Messstrecke 33 in einem vorgegebenen und/oder vorgebbaren Zustand entspricht. Bei diesem Zustand kann es sich insbesondere um einen unbelasteten Zustand der Messstrecke 33 handeln, also wenn diese weder einen Gegenstand 1 noch ein hinter diesem verborgenes Objekt 3 erfasst.

Mittels eines Doppelpfeils 93 ist in Fig. 3 symbolisiert, dass die Messstrecke 33 zum Zwecke des Detektierens des Objektes 3 mit diesem und/oder mit dem das Objekt verdeckenden Gegenstand 1 in eine Wechselwirkung treten kann. In Fig. 3 sind der Gegenstand 1 und das Objekt 3 in einer Schnittdarstellung lediglich angedeutet. Bei dem Gegenstand 1 kann es sich um eine Wand und/oder Beplankung einer in Ständerbauweise aufgebauten Wand handeln. Bei dem Objekt 3 kann es sich um einen entsprechenden Ständer einer solchen Wand, insbesondere einen Holzbalken und/oder Metallständer, handeln.

Als Ergebnis der Wechselwirkung mit dem Gegenstand 1 und/oder dem Objekt 3 liefert die Messstrecke 33 ein Primärmessausgangssignal 37. Die Referenzstrecke 31 liefert ein von der mittels des Doppelpfeils 93 symbolisierten Wechselwirkung unabhängiges Referenzausgangssignal 35. Das Referenzausgangssignal 35 und das Primärmessausgangssignal 37 werden zu dem in Fig. 2 beschriebenen Sekundärmessausgangssignal 39 addiert. Grundsätzlich ist die Referenzstrecke 31 nicht erforderlich, bietet aber vorteilhaft die Möglichkeit, dass das Sekundärmessausgangssignal 39 wie vorab beschrieben als Nullsignal in dem vorgegebenen oder vorgebbaren Zustand der Schaltungsanordnung 59 erzeugbar ist, insbesondere bereits ohne weitere Stelleingriffe und/oder Beeinflussungen.

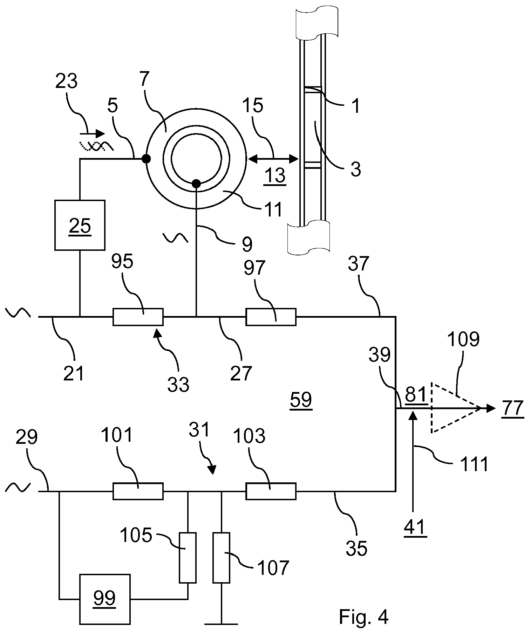

Fig. 4 zeigt eine Detailansicht der in Fig. 3 gezeigten Schaltungsanordnung 59, wobei die Vorschaltung 91 nicht dargestellt ist. Die Messstrecke 33 der Schaltungsanordnung 59 weist ein Filter 25 auf, an dem die Messwechselspannung 21 anliegt. Das Filter 25 bewirkt eine Phasenverschiebung 23 der Messwechselspannung 21 und liefert als Ausgangsgröße eine erste Wechselspannung 5. Die erste Wechselspannung 5 ist also zu der Messwechselspannung 21 phasenverschoben. Das Filter 25 kann einen beliebigen Aufbau aufweisen, insbesondere als Tiefpass oder als Hochpass ausgeführt sein. Der Ausgang des Filters 25 ist an einen ersten Messaufnehmer 7 der Messstrecke 33 angeschlossen. An dem ersten Messaufnehmer 7 liegt also die erste Wechselspannung 5 an. Bevorzugt handelt es sich bei dem ersten Messaufnehmer 7 um eine Elektrode. Bevorzugt weist die Elektrode des ersten Messaufnehmers 7 eine ringförmige Gestalt auf.

Der erste Messaufnehmer 7 ist benachbart zu einem zweiten Messaufnehmer 11 angeordnet. Der zweite Messaufnehmer 11 weist bevorzugt eine scheibenförmige Gestalt auf, wobei der zweite Messaufnehmer 11 bevorzugt konzentrisch innerhalb des ersten Messaufnehmers 7 angeordnet ist. Die Messstrecke 33 der Schaltungsanordnung 59 weist einen Messspannungsteiler 27 mit einer ersten Impedanz 95 und einer zweiten Impedanz 97 auf. Zwischen den Impedanzen 95 und 97 kann eine zweite Wechselspannung 9 abgegriffen werden. Die zweite Wechselspannung 9 wird an dem zweiten Messaufnehmer 11 angelegt, bei dem es sich insbesondere um eine Elektrode handelt. Es ist denkbar die Beschaltung der Messaufnehmer 7 und 11 zu vertauschen. Vorteilhaft ist, dass die Messaufnehmer benachbart zueinander angeordnet sind, also elektrisch miteinander in Wechselwirkung treten können.

Die Referenzstrecke 31 ist der Messstrecke 33 parallel geschaltet und weist bevorzugt einen der Messstrecke 33 analogen Aufbau auf. Im Einzelnen weist die Referenzstrecke 31 ein Referenzfilter 99, eine dritte Impedanz 101, eine vierte Impedanz 103, eine fünfte Impedanz 105 und eine sechste Impedanz 107 auf.

Bevorzugt handelt es sich bei den Impedanzen 95, 97 und 101 bis 107 um Kondensatoren. Die dritte Impedanz 101 entspricht bevorzugt der ersten Impedanz 95 der Messstrecke 33. Die vierte Impedanz 103 entspricht bevorzugt der zweiten Impedanz 97. Die fünfte Impedanz 105 kompensiert bevorzugt eine sich zwischen den Messaufnehmern 7 und 11 ergebende Kapazität. Die sechste Impedanz 107 entspricht bevorzugt einer Kapazität des ersten Messaufnehmers 7, insbesondere derjenigen Kapazität des ersten Messaufnehmers 7 in Wechselwirkung mit dem Gegenstand 1 und/oder dem Objekt 3. Außerdem entspricht bevorzugt ein Übertragungsverhalten des Referenzfilters 99 dem Übertragungsverhalten des Filters 25 der Messstrecke 33. Es ist ersichtlich, dass dadurch das am Ende der Messstrecke 33 anliegende Primärmessausgangssignal 37 und das am Ende der Referenzstrecke 31 anliegende Referenzausgangssignal 35 aufgrund der Parallelschaltung und der Gegenphasigkeit der Messwechselspannung 21 und der Referenzwechselspannung 29 zu dem Sekundärmessausgangssignal 39, gegebenenfalls in Form des vorab beschriebenen Nullsignals, addiert werden können. Das Sekundärmessausgangssignal 39 kann optional mittels eines in Fig. 4 lediglich gestrichelt dargestellten Verstärkers 109 verstärkt und der nicht näher dargestellten Messstrecke und/oder dem dieser nachgeschalteten Sollwertvergleich 77 zugeführt werden. Mittels eines Pfeils 111 ist in Fig. 4 angedeutet, an welcher Stelle der Schaltungsanordnung 59 das Stellsignal 41, gegebenenfalls mittels des Demodulators 79, aufbereitet, auf das Sekundärmessausgangssignal 39 einwirkt.

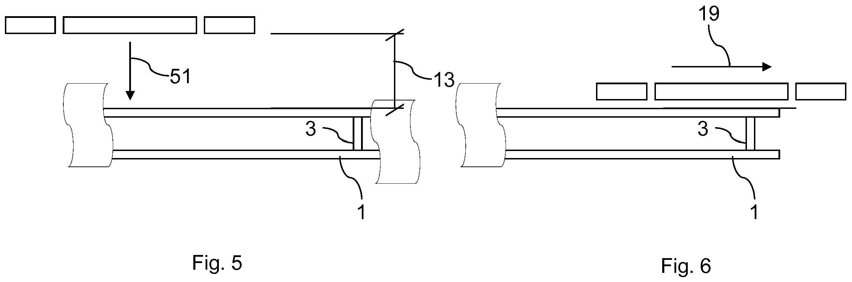

Fig. 5 zeigt eine Schnittansicht des Gegenstandes 1 und des Objekts 3 zusammen mit einer schematischen Darstellung der Messaufnehmer 7 und 11. Fig. 6 zeigt die Schnittansicht gemäß Figur 5, wobei im Unterschied die Messaufnehmer 7 und 11 an dem Gegenstand 1 angelegt sind.

Im Folgenden wird anhand der Fig. 5 und 6 das Durchführen eines Messvorgangs zum Detektieren des Objekts 3 hinter dem Gegenstand 1 näher erläutert. Zunächst erfolgt eine Annäherung 51 der Messaufnehmer 7 und 11 an den Gegenstand 1. Dadurch treten die Messaufnehmer 7 und 11 in eine Wechselwirkung mit dem Gegenstand 1. Vorteilhaft kann während des Annäherns 51 diese Wirkung ermittelt und gegebenenfalls gespeichert werden. Vorteilhaft kann diese in Abhängigkeit einer Entfernung 13 der Messaufnehmer 7, 11 zu dem Gegenstand 1 erfolgen. Anschließend erfolgt, wie in Fig. 6 zu erkennen, eine Bewegung 19, wobei die Messaufnehmer 7 und 11 in Richtung des hinter dem Gegenstand 1 verborgenen Objekts 3 bewegt werden. Sobald sich das Objekt 3 ebenfalls in einem Erfassungsbereich der Messaufnehmer 7, 11 befindet, tritt eine Änderung der Wirkung ein. Vorteilhaft kann in Abhängigkeit dieser Änderung der Wirkung das Objekt 3 detektiert werden. Vorteilhaft genügt vorzugsweise eine qualitative Ermittlung der Wirkung. Eine quantitative Aussage über eine tatsächliche Ist-Entfernung der Messaufnehmer 7,11 zu dem Gegenstand 1 ist vorteilhaft nicht erforderlich.

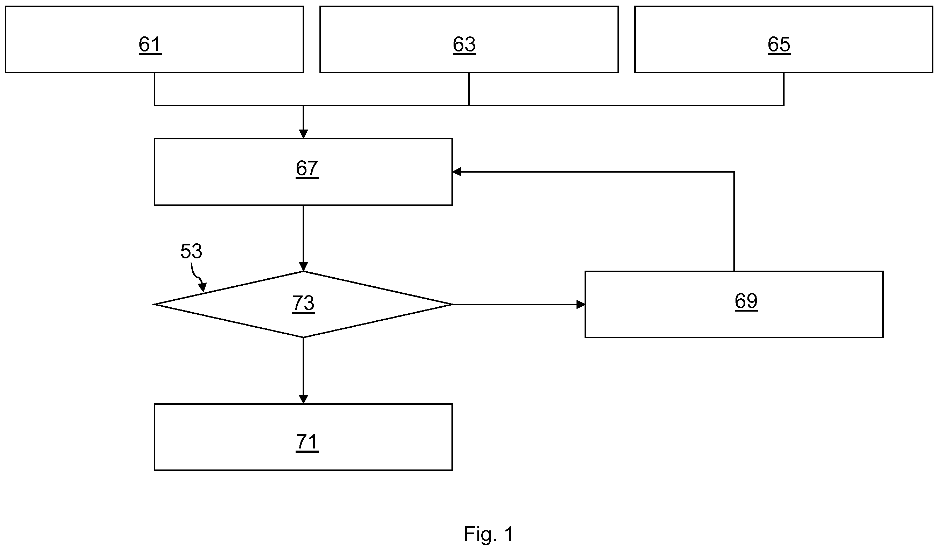

Im Folgenden wird anhand der Fig. 1 ein Verfahren zum Detektieren des Objekts 3 hinter dem Gegenstand 1 näher erläutert. In einem ersten Schritt 61 wird die erste Wechselspannung 5 an den ersten Messaufnehmer 7 angelegt. In einem zweiten Schritt 63 wird die zweite Wechselspannung 9 an den zweiten Messaufnehmer 11 angelegt. In einem dritten Schritt 65 wird die Wirkung des Gegenstands 1 in Abhängigkeit der Entfernung 13 ermittelt. Die Wirkung ist in Fig. 4 mittels eines Doppelpfeils und des Bezugszeichens 15 angedeutet. Um die Wirkung 15 zu ermitteln, erfolgt die Bewegung 19 der Messaufnehmer 7 und 11 relativ zu dem Gegenstand 1 und dem Objekt 3. Vorzugsweise werden die Messaufnehmer 7, 11 zu Beginn einer Messung auf den Gegenstand 1 zubewegt.

In einem vierten Schritt 67 wird eine Änderung 17 der von der Entfernung 13 abhängigen Wirkung 15 ermittelt. Dies erfolgt vorzugsweise während der Bewegung 19 der Messaufnehmer 7, 11 entlang des Gegenstandes 1, insbesondere entlang einer Oberfläche des Gegenstandes 1, insbesondere durch ein manuelles Entlangführen der Messaufnehmer 7, 11. Die Wirkung 15 ist abhängig von der Entfernung 13, liegt insbesondere als Funktion vor. In einem Vergleich 73 erfolgt ein Vergleich, der insbesondere zuvor ermittelten und gespeicherten abhängigen Wirkung 15 mit einer während der Bewegung 19 auftretenden aktuellen Wirkung bzw. der Änderung 17 (Fig. 2) der abhängigen Wirkung 15. Insbesondere liegt dem Vergleich 73 ein Schwellwert 53 zugrunde, mit dem die Änderung 17 mit der abhängigen Wirkung 15 verglichen werden kann. Für den Fall, dass der Schwellwert 53 nicht überschritten ist, verzweigt das Verfahren in einen fünften Schritt 69, der anzeigt, dass das Objekt 3 sich nicht in dem Erfassungsbereich der Messaufnehmer 7 und 11 befindet. Der fünfte Schritt 69 verzweigt zurück in den vierten Schritt 67. Dies erfolgt zyklisch so lange, bis der Schwellwert 53 des Vergleichs 73 überschritten ist, wobei dadurch das Verfahren in einen sechsten Schritt 71 verzweigt. Der sechste Schritt 71 zeigt an, dass das Objekt 3 sich in dem Erfassungsbereich der Messaufnehmer 7 und 11 befindet, also detektiert ist. Insbesondere ist es denkbar, eine Vielzahl von Schwellwerten zu definieren und dem Vergleich 73 zu Grunde zu legen, wobei zum Detektieren des Objekts 3 angezeigt werden kann, wie viele der Schwellwerte überschritten sind. So kann eine Position des Objekts 3 genauer bestimmt werden. Es ist denkbar, zunächst die Änderung 17 als solche zu ermitteln, beispielsweise in Form einer Maßzahl oder eines Skalars, und diese dem Vergleich 73 zuzuführen. Alternativ ist es jedoch auch denkbar den Vergleich 73 direkt mit der ermittelten und gespeicherten abhängigen Wirkung 15 im Vergleich zu der während der Bewegung 19 auftretenden aktuellen Wirkung vorzunehmen, sodass durch den Vergleich 73 die Änderung 17 ermittelt und dadurch auf die Anwesenheit des Objekts 3 geschlossen werden kann. In beiden Fällen erfolgt die Detektion des Objekts 3 in Abhängigkeit von der Änderung 17 der abhängigen Wirkung 15, also der entfernungsabhängigen Funktion. Im Folgenden wird mit Bezug auf die in Fig. 2 dargestellte Analysevorrichtung 57 das Verfahren detaillierter erläutert. Das Stellsignal 41 oder ein davon abhängiges Signal kann in einem Phasenraum 49 mittels einer Vektoranalyse 47 ausgewertet werden. Als Ergebnis der Vektoranalyse 47 kann die abhängige Wirkung 15 als Verlauf 45 in dem Phasenraum 49 dargestellt werden. Bei dem Verlauf 45 handelt es sich insbesondere um eine Vielzahl von zeitunabhängigen Zuständen des Stellsignals 41 des Reglers 43, die während der Annäherung 51 der Messaufnehmer 7 und 11 in Richtung des Gegenstandes 1 auftreten. Die Phasenpunkte des Verlaufs 45 stellen also einen, insbesondere qualitativen, funktionellen Zusammenhang der Wechselwirkung des Gegenstandes 1 mit den Messaufnehmern 7, 11 in Abhängigkeit der Entfernung 13 dar. Vorteilhaft führt ein geringfügiges Verkippen der Messaufnehmer 7 und 11 relativ zu dem Gegenstand 1 zwar zu einer Änderung des Stellsignals 41, jedoch lediglich zu einer Änderung des Stellsignals 41 auf dem oder entlang des Verlaufs 45.

Vorteilhaft kann nun, sobald sich das Objekt 3 in dem Erfassungsbereich der Messaufnehmer 7 und 11 befindet, die Änderung 17 mittels der Vektoranalyse 47 als Abweichen des Zustandes des Stellsignals 41 von dem Verlauf 45 ermittelt werden. Vorteilhaft kann diese Änderung 17 unabhängig von einem Betrag eines Vektors in dem Phasenraum 49 ermittelt werden. Vielmehr ist vorteilhaft lediglich ein Winkel des entsprechenden Vektors des Stellsignals 41 in dem Phasenraum 49 als Abweichen von dem Verlauf 45 maßgeblich. Insbesondere kann als Schwellwert 53 eine Vorgabe für einen solchen Winkel der Vektoranalyse verwendet werden. Alternativ oder zusätzlich ist es auch denkbar, den Verlauf 45 mit einer Umgebung zu verstehen, wobei ein Phasenpunkt des Stellsignals 41, der sich nicht in der Umgebung des Verlaufs 45 befindet, die Änderung 17 der abhängigen Wirkung 15 anzeigt, also das Objekt 3 detektiert.

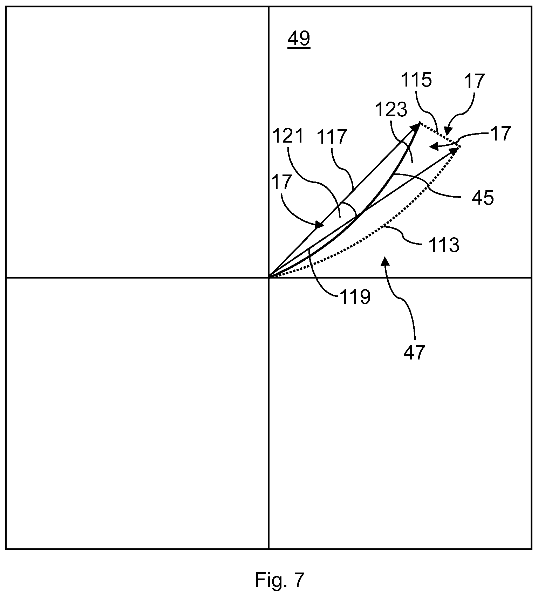

Fig. 7 zeigt eine detailliertere grafische Darstellung des Phasenraums 49. Die abhängige Wirkung 15 ist durch den Verlauf 45 repräsentiert. Außerdem ist in Fig. 7 gepunktet ein weiterer Verlauf 113 eingezeichnet, der sich nach der Änderung 17 ergibt, also falls sich der Gegenstand 1 und dahinter das Objekt 3 in einem Messbereich der Messaufnehmer 7, 11 befinden.

Besonders vorteilhaft wurde erkannt, dass die durch das Objekt 3 verursachte Änderung 17 des Verlaufs 45 mit einer Winkeländerung des Vektors derart einhergeht, dass eine Fläche 123 zwischen dem Verlauf 45, einer gepunktet dargestellten Änderungslinie 115 und dem neu auftretenden weiteren Verlauf 113 gebildet wird. Dies ist vorteilhaft auch bei einer eventuellen Änderung der Entfernung 13 zwischen den Messaufnehmern 7, 11 und dem Gegenstand 1 durch Verkippen oder Abheben der Messaufnehmer 7, 11 sicher möglich. Der weitere Verlauf 113 verläuft zum Verlauf 45 annähernd oder zumindest im Wesentlichen parallel und/oder weist eine ähnliche Krümmung auf. Die Änderungslinie 115 kann als weiterer funktionaler Zusammenhang beziehungsweise Änderungsfunktion aufgefasst werden, der/die, insbesondere bei gleich bleibender Entfernung 13, dann auftritt, wenn die Messaufnehmer 7 und 11 zu dem und dann über das Objekt 3 geschoben werden. Dabei tritt auch die als vorteilhaft erkannte Winkeländerung eines die jeweiligen auf der Änderungsfunktion liegenden Phasenpunkte beschreibenden Vektors auf. Beispielhaft sind in Fig. 7 ein erster Vektor 117, ein zweiter Vektor 119 und ein von diesen aufgespannter Winkel 121 eingezeichnet. Der erste Vektor 117 endet auf dem Verlauf 45, steht also für einen Zustand, bei dem nur der Gegenstand 1 im Messbereich der Messaufnehmer 7 und 11 liegt. Der zweite Vektor 119 endet auf dem weiteren Verlauf 113, steht als für einen Zustand, bei dem der Gegenstand 1 und das Objekt 3 im Messbereich der Messaufnehmer 7 und 11 liegen. Vorteilhaft sind also verschiedene Möglichkeiten zum Erkennen der Änderung 17 denkbar.

Als erste Alternative kann die Änderungslinie 115 ermittelt werden. Sofern diese von dem Vektor überstrichen ist, kann auf die Änderung 17 geschlossen werden.

Als weitere Alternative kann der weitere Verlauf 113 ermittelt werden. Sofern dieser ermittelt ist und der zweite Vektor 119 des aktuellen Messsignals auf diesen zeigt, kann auf die Änderung 17 geschlossen werden.

Als weitere Alternative kann der Winkel 121 ermittelt werden. Insbesondere sofern dieser einen Schwellwert überschreitet, kann auf die Änderung 17 geschlossen werden. Zusätzlich kann ein Maß des Winkels Aufschluss über eine Eigenschaft des Objekts 3 geben.

Als besonders vorteilhafte Alternative können zunächst der Verlauf 45, die Änderungslinie 115 und der weitere Verlauf 113 ermittelt werden. Aus diesen kann dann die Fläche 123 ermittelt werden. Falls die Fläche 123 ermittelt ist oder diese ein gewisses Maß übersteigt, kann auf die Änderung 17 geschlossen werden. Durch das Auftreten beziehungsweise Ermitteln der Fläche 123 kann also das Vorhandensein des Objekts 3 hinter dem Gegenstand 1 nachgewiesen werden. Es ist denkbar, zur Ermittlung der Fläche 123 die Änderungslinie 115 und den weiteren Verlauf 113 in nur einem Schritt während des Überfahrens des Objekts 3 zu ermitteln, wobei ein Übergang zwischen beiden fließend sein kann. Wichtig ist lediglich das Auftreten beziehungsweise Ermitteln der von diesen und dem Verlauf 45 aufgespannten Fläche 123. Es ist ersichtlich, dass dabei auftretende versehentliche Änderungen der Entfernung 13 keine Rolle spielen, da unabhängig davon die Änderung der Fläche 123 auftritt und für den eigentlichen Nachweis des Objekts 3 ein absolutes Maß der Fläche 123 keine Rolle spielt. Alternativ oder zusätzlich kann die Fläche 123 auch als von den Vektoren 117 und 119 aufgespannte Fläche ermittelt werden.

Zusammenfassend wird durch die Vektoranalyse 47 ein Systemverhalten hinsichtlich zweier Parameter untersucht, nämlich die Lage der Messaufnehmer 7, 11 zu dem Gegenstand 1 und/oder dem Objekt 3 als ersten Parameter und die Anwesenheit des Objekts 3 als zweiten Parameter. Vorteilhaft erzeugen beide Parameter ein unterscheidbares Systemverhalten. Wobei vereinfachend die Entfernung 13 als erster Parameter angesehen werden kann, da insbesondere geringe Winkeländerungen, wie sie in der Praxis vorkommen, zumindest näherungsweise wie eine Entfernungsänderung wirken und/oder diese bewirken. Die abhängige Wirkung 15 ist also diejenige Wirkung, die dann auftritt, wenn sich nur der erste Parameter ändert. Diese zeigt sich vorteilhaft insbesondere in der Vektoranalyse 47 als der Verlauf 45. Sobald sich der zweite Parameter auch ändert, also das Objekt 3 in Wechselwirkung mit den Messaufnehmern 7, 11 tritt, kann durch die Vektoranalyse 47 die Änderung 17 ermittelt und so auf das Objekt 3 geschlossen werden.

Mit anderen Worten bedeutet dies, dass ein Objekt 3 hinter einem Gegenstand 1 detektiert wird, wenn dieses eine Änderung 17 gegenüber dem vorher aufgenommenen Verlauf 45 verursacht. Das Abweichen vom Verlauf 45, welches durch ein Objekt 3 verursacht wird, kann bei nicht erfindungsgemäßen Vorrichtungen, wie sie beispielsweise aus dem Stand der Technik bekannt sind, bedeuten, dass beim Detektieren eines Objekts 3 einfach nur der Verlauf 45 von dessen Endpunkt aus fortgesetzt würde. Desweiteren würde dann eine eventuelle Veränderung der Entfernung 13 der Messaufnehmer 7, 11 zum Gegenstand 1 durch Verkippen ebenfalls ein verändertes Stellsignal 41 zur Folge haben, obwohl das Objekt 3 sich noch im Erfassungsbereich der Messaufnehmer 7, 11 befindet, wobei jedoch das Stellsignal 41 sich entlang des Verlaufs 45 zurück zum Ursprung bewegen würde. Das heißt, dass das Stellsignal 41 sich vom Punkt eines "maximal" geänderten Stellsignals 41 mit gleichem Vektor wieder zunächst zurück zum Endpunkt des Verlaufs 45 bewegen würde. Nimmt die Änderung der Entfernung 13 der Messaufnehmer 7, 11 zum Gegenstand 1 weiter zu, würde das Stellsignal 41 seinen Weg zum Ursprung entlang des Verlaufs 45 weiter fortsetzten. Es ist ersichtlich, dass ein solches Verhalten nicht als Änderung 17 der abhängigen Wirkung 15 zu verstehen ist, da vom Grundsatz solche Vorrichtungen nur einen Parameter detektieren können, hier beispielsweise die Masse von im Messbereich liegenden Gegenständen/Objekten oder die Entfernung, da im Wesentlichen Änderungen der Masse als auch der Entfernung eine identische Systemantwort liefern.

Im Vergleich dazu ist es erfindungsgemäß möglich, die von dem Objekt 3 verursachte Änderung 17 der abhängigen Wirkung 15 zu detektieren. Eine durch ein Objekt 3 verursachte Änderung 17 der abhängigen Wirkung 15 und damit ein Abweichen von dem Verlauf 45, also eine Veränderung des zweiten Parameters, geht vorteilhaft regelmäßig mit einer Winkeländerung des Winkels 121 zwischen dem ersten Vektor 117 und dem zweiten Vektor 119 einher, so dass sich bei einer Änderung der Entfernung 13 zwischen den Messaufnehmern 7, 11 und dem Gegenstand 1 bei Vorhandensein des Objekts 3 auch durch Verkippen oder Abheben der Messaufnehmer 7, 11 eine Fläche 123 zwischen dem Verlauf 45, der Änderung 17 und dem nun zum Verlauf 45 annähernd parallel verlaufenden neuen weiteren Verlauf 113 ausbildet. Diese Fläche 123 ist dann in der praktischen Anwendung auch der Nachweis für die Anwesenheit eines Objekts 3 hinter einem Gegenstand 1. Eine Veränderung nur des ersten Parameters, also der Entfernung 13, geht im Unterschied im Wesentlichen mit einer Betragsänderung des ersten Vektors 117 oder zumindest einer lediglich vergleichsweise kleinen Winkeländerung einher, wobei auch die Fläche 123 nicht ausgebildet wird. Vorteilhaft können ohnehin bei einem Messvorgang auftretende kleine Änderungen der Entfernung 13 zum Ermitteln der Fläche 123 ausgenutzt werden. Falls die Messaufnehmer 7, 11 zu Beginn einer Messung auf ein Objekt 3 aufgesetzt werden, kann zusätzlich eine Richtung der Winkeländerung ermittelt werden, insbesondere, um das Verfahren entsprechend zu kalibrieren und/oder eine Fehlermeldung auszugeben, insbesondere einen Anwender aufzufordern, die Messaufnehmer 7, 11 neben dem Objekt 3 erneut aufzusetzen.

Bezüglich der vorteilhaften Vektoranalyse wird zusätzlich auf die nachveröffentlichten Anmeldungen desselben Anmelders mit den Aktenzeichen DE 10 2013 226 887.4, DE 10 2014 010 671.3 verwiesen. Diese Druckschriften werden durch Referenz zum Inhalt dieser Anmeldung gemacht, insbesondere wird auf die Figuren, die Figurenbeschreibung sowie die Ansprüche Bezug genommen.

Durch die Erfindung wird ein Detektieren eines hinter einem Gegenstand 1 verborgenen Objekts 3 so verbessert, dass das Objekt 3 möglichst unabhängig von einer relativen Lage der Vorrichtung zu dem Gegenstand 1, insbesondere einer Winkellage, erkannt werden kann, insbesondere auch dann, wenn die Vorrichtung zum Detektieren des Objekts 3 manuell über den Gegenstand 1 hinweggeführt wird.

**Bezugszeichenliste**

| | | | |
|---|---|---|---|
| 1 | Gegenstand | 69 | fünfter Schritt |
| 3 | Objekt | 71 | sechster Schritt |
| 5 | erste Wechselspannung | 73 | Vergleich |
| 7 | erster Messaufnehmer | 75 | Regelungswirkkette |
| 9 | zweite Wechselspannung | 77 | Sollwertvergleich |
| 11 | zweiter Messaufnehmer | 79 | Demodulator |
| 13 | Entfernung | 81 | Additionsstelle |
| 15 | abhängige Wirkung | 83 | Regelgröße |
| 17 | Änderung | 85 | Taktgenerator |
| 19 | Bewegen | 87 | Taktsignal |
| 21 | Messwechselspannung | 89 | weiteres Taktsignal |
| 23 | Phasenverschiebung | 91 | optionale Vorschaltung |
| 25 | Filter | 93 | Doppelpfeil |
| 27 | Messspannungsteiler | 95 | erste Impedanz |
| 29 | Referenzwechselspannung | 97 | zweite Impedanz |
| 31 | Referenzstrecke | 99 | Referenzfilter |
| 33 | Messstrecke | 101 | dritte Impedanz |
| 35 | Referenzausgangssignal | 103 | vierte Impedanz |
| 37 | Primärmessausgangssignal | 105 | fünfte Impedanz |
| 39 | Sekundärmessausgangssignal | 107 | sechste Impedanz |
| 40 | Sollwert | 109 | Verstärker |
| 41 | Stellsignal | 111 | Pfeil |
| 43 | Regler | 113 | weiterer Verlauf |
| 45 | Verlauf | 115 | Änderungslinie |
| 47 | Vektoranalyse | 117 | erster Vektor |
| 49 | Phasenraum | 119 | zweiter Vektor |
| 51 | Annäherung | 121 | Winkel |
| 53 | Schwellwert | 123 | Fläche |
| 55 | Messanordnung | | |
| 57 | Analysevorrichtung | | |
| 59 | Schaltungsanordnung | | |
| 61 | erster Schritt | | |
| 63 | zweiter Schritt | | |
| 65 | dritter Schritt | | |
| 67 | vierter Schritt | | |

## Patentansprüche

1. Verfahren zum Detektieren eines hinter einem Gegenstand (1) verborgenen Objekts (3) mit den Schritten
- Anlegen einer ersten Wechselspannung (5) an einen ersten Messaufnehmer (7),
- Anlegen einer zweiten Wechselspannung (9) an einen benachbart zu dem ersten Messaufnehmer (7) angeordneten zweiten Messaufnehmer (11),
- Ermitteln einer entfernungsabhängigen Messwertes einer Wirkung des Gegenstands (1) auf zumindest eine der Wechselspannungen (5, 9),
- Ermitteln einer bei einem Bewegen (19) der Messaufnehmer (7, 11) entlang des Gegenstandes (1) auftretenden Änderung (17) einer Entfernungsabhängigkeit des Messwertes,
- Detektieren des Objekts (3) in Abhängigkeit von der Änderung (17) der Entfernungsabhängigkeit des Messwertes,
**dadurch gekennzeichnet, dass**
- als Messwert eine entfernungsabhängige Funktion der Wirkung des Gegenstands (1) auf zumindest eine der Wechselspannungen (5, 9) ermittelt wird,
- die beim Bewegen (19) der Messaufnehmer (7, 11) auftretende Änderung (17) einer Entfernungsabhängigkeit der Funktion ermittelt wird,
- das Objekt (3) in Abhängigkeit von der Änderung (17) der Entfernungsabhängigkeit der Funktion detektiert wird.

2. Verfahren nach Anspruch 1, **gekennzeichnet durch**
- Erzeugen einer Messwechselspannung (21),
- Filtern der Messwechselspannung (21) mittels eines eine Phasenverschiebung (23) bewirkenden Filters (25) und dadurch
- Erzeugen der ersten Wechselspannung (5).

3. Verfahren nach Anspruch 2, **gekennzeichnet durch**
- Anlegen der Messwechselspannung (21) an einen Messspannungsteiler (27),
- Abgreifen der zweiten Wechselspannung (9) an dem Messspannungsteiler (27) zum Anlegen der zweiten Wechselspannung (9) an den zweiten Messaufnehmer (11).

4. Verfahren nach Anspruch 2 oder 3, **dadurch gekennzeichnet, dass** das Filter (25) im Vergleich zu dem Messspannungsteiler (27) eine niedrige oder ungleiche Impedanz aufweist.

5. Verfahren nach einem der vorhergehenden Ansprüche, **gekennzeichnet durch**
- Erzeugen einer um 180° zu der Messwechselspannung (21) phasenverschobenen Referenzwechselspannung (29),
- Anlegen der Referenzwechselspannung (29) an eine den Messaufnehmern (7, 11) parallel geschaltete Referenzstrecke (31).

6. Verfahren nach Anspruch 5, **dadurch gekennzeichnet, dass** der Referenzstrecke (31) eine die Messaufnehmer (7, 11), das Filter (25) und den Messspannungsteiler (27) aufweisende Messstrecke (33) parallel geschaltet ist, wobei die Referenzstrecke (29) analog zu der Messstrecke (33) aufgebaut ist.

7. Verfahren nach Anspruch 6, **gekennzeichnet durch** Addieren eines Referenzausgangssignals (35) der Referenzstrecke (31) mit einem Primärmessausgangssignal (37) der Messstrecke (33) zu einem Sekundärmessausgangssignal (39).

8. Verfahren nach Anspruch 7, **gekennzeichnet durch**
- Vorgeben eines Sollwerts (40) für das Sekundärmessausgangssignal (39),
- Beeinflussen des Sekundärmessausgangssignals (39) in Abhängigkeit des Sollwerts (40) mittels eines Stellsignals (41) eines Reglers (43),
- Auswerten des Stellsignals (41) zum Ermitteln der entfernungsabhängigen Funktion und der Änderung (17) der entfernungsabhängigen Funktion.

9. Verfahren nach Anspruch 8, **gekennzeichnet durch**
- Ermitteln eines von der Entfernung (13) der Messaufnehmer (7,11) zu dem Gegenstand (1) abhängigen Verlaufs (45) des Stellsignals (41) und/oder
- Ermitteln des Verlaufs (45) in Form einer Vektoranalyse (47) in einem Phasenraum (49) des Stellsignals (41) und/oder
- Ermitteln des Verlaufs (45) während eines Annäherns (51) der Messaufnehmer (7, 11) an den Gegenstand (1) vor einer Detektion des Objekts (3).

10. Verfahren nach Anspruch 9, **gekennzeichnet durch**
- Ermitteln einer in dem Phasenraum (49) von dem Verlauf (45) oder einem Vektor (117,119) begrenzten Fläche (123),
- Ermitteln der Änderung (17) in Abhängigkeit von der Fläche (123).

11. Verfahren nach Anspruch 9 oder 10, **gekennzeichnet durch**
- Vorgeben eines Schwellwerts (53) für den Verlauf (45),
- Vergleichen des Stellsignals (41) mit dem Schwellwert (53),
- Detektieren des Objekts (3), sobald das Stellsignal (41) so weit von dem Verlauf (45) abweicht, dass der Schwellwert (53) überschritten ist.

12. Verfahren nach einem der vorhergehenden Ansprüche, **gekennzeichnet durch**
- Ermitteln einer bei dem Bewegen (19) der Messaufnehmer (7, 11) entlang des Gegenstandes (1) auftretenden aktuellen entfernungsabhängigen Funktion und einer Änderung (17) der aktuellen entfernungsabhängigen Funktion im Vergleich zu der entfernungsabhängigen Funktion,
- Detektieren des Objekts (3) in Abhängigkeit von der Änderung (17) der aktuellen entfernungsabhängigen Funktion im Vergleich zu der entfernungsabhängigen Funktion.

13. Verfahren nach einem der vorhergehenden Ansprüche, **gekennzeichnet durch**
- Speichern der ermittelten entfernungsabhängigen Funktion,
- Vergleichen der gespeicherten Funktion mit einer während der Bewegung (19) der Messaufnehmer (7,11) entlang des Gegenstandes (1) auftretenden aktuellen Wirkung zum Ermitteln der Änderung (17),
- Detektieren des Objekts (3) in Abhängigkeit des Vergleichens.

14. Messanordnung (55) zum Detektieren eines hinter einem Gegenstand (1) verborgenen Objekts mit:
- einem ersten Messaufnehmer (7), an den eine erste Wechselspannung (5) anlegbar ist,
- einem benachbart zu dem ersten Messaufnehmer (7) angeordneten zweiten Messaufnehmer (11), an den eine zweite Wechselspannung (9) anlegbar ist,
- einer Analysevorrichtung (57), mittels der ein entfernungsabhängiger Messwert einer Wirkung des Gegenstands (1) auf zumindest eine der Wechselspannungen (5, 9) ermittelbar oder zumindest speicherbar ist, eine bei einem Bewegen (19) der Messaufnehmer (7,11) entlang des Gegenstandes (1) auftretende Änderung (17) einer Entfernungsabhängigkeit des entfernungsabhängigen Messwerts ermittelbar und das Objekt (3) in Abhängigkeit von der Änderung (17) der Entfernungsabhängigkeit des Messwerts detektierbar ist.
**dadurch gekennzeichnet, dass** mittels der Analysevorrichtung (57)
als Messwert eine entfernungsabhängige Funktion der Wirkung des Gegenstands (1) auf zumindest eine der Wechselspannungen (5, 9) ermittelbar oder zumindest speicherbar ist, die beim Bewegen (19) der Messaufnehmer (7,11) auftretende Änderung (17) der Entfernungsabhängigkeit der entfernungsabhängigen Funktion ermittelbar und das Objekt (3) in Abhängigkeit von der Änderung (17) der Entfernungsabhängigkeit der Funktion detektierbar ist.

15. Messanordnung (55) nach Anspruch 14, **gekennzeichnet durch**
- eine die Messaufnehmer (7,11) aufweisende Schaltungsanordnung (59),
- einen der Analysevorrichtung (57) vorgeschalteten sowie der Schaltungsanordnung (59) eingangsseitig nachgeschalteten und ausgangsseitig parallel geschalteten Regler (43), wobei ein Regelverhalten des Reglers (43) zum Ermitteln der Funktion und/oder der Änderung (17) der Funktion mittels der Analysevorrichtung (57) analysierbar ist.

## Claims

1. Method for detecting an object (3) hidden behind an article (1), comprising the steps
- applying a first alternating voltage (5) to a first measuring sensor (7),
- applying a second alternating voltage (9) to a second measuring sensor (11) arranged adjacent to the first measuring sensor (7),
- determining a distance-dependent measured value of an effect of the object (1) on at least one of the alternating voltages (5, 9),
- determining a change (17) in a distance dependence of the measured value occurring during a movement (19) of the measuring sensors (7, 11) along the article (1),
- detecting the object (3) as a function of the change (17) in the distance dependence of the measured value,
**characterised in that**
- a distance-dependent function of the effect of the article (1) on at least one of the alternating voltages (5, 9) is determined as the measured value,
- the change (17) in a distance dependence of the function occurring during movement (19) of the measuring sensors (7, 11) is determined,
- the object (3) is detected as a function of the change (17) in the distance dependence of the function.

2. Method according to claim 1, **characterised by**
- generating a measuring alternating voltage (21),
- filtering the measuring alternating voltage (21) by means of a filter (25) effecting a phase shift (23) and thereby
- generating the first alternating voltage (5).

3. Method according to claim 2, **characterised by**
- applying the measuring alternating voltage (21) to a measuring voltage divider (27),
- tapping the second alternating voltage (9) at the measuring voltage divider (27) for applying the second alternating voltage (9) to the second measuring sensor (11).

4. Method according to claim 2 or 3, **characterised in that** the filter (25) has a low or unequal impedance as compared with the measuring voltage divider (27).

5. Method according to one of the preceding claims, **characterised by**
- generating a reference alternating voltage (29) phase-shifted by 180° to the measuring alternating voltage (21),
- applying the reference alternating voltage (29) to a reference path (31) connected in parallel with the measuring sensors (7, 11).

6. Method according to claim 5, **characterised in that** a measuring path (33) comprising the measuring sensors (7, 11), the filter (25) and the measuring voltage divider (27) is connected in parallel with the reference path (31), wherein the reference path (31) is constructed analogously to the measuring path (33).

7. Method according to claim 6, **characterised by** adding a reference output signal (35) of the reference path (31) with a primary measurement output signal (37) of the measuring path (33) to a secondary measurement output signal (39).

8. Method according to claim 7, **characterised by**
- setting a target value (40) for the secondary measurement output signal (39),
- influencing the secondary measurement output signal (39) dependent upon the target value (40) by means of a control signal (41) of a controller (43),
- evaluating the control signal (41) for determining the distance-dependent function and the change (17) of the distance-dependent function.

9. Method according to claim 8, **characterised by**
- determining a course (45) of the control signal (41) dependent upon the distance (13) of the measuring sensors (7, 11) from the article (1) and/or
- determining the course (45) in the form of a vector analysis (47) in a phase space (49) of the control signal (41) and/or
- determining the course (45) during an approach (51) of the measuring sensors (7, 11) to the article (1) before a detection of the object (3).

10. Method according to claim 9, **characterised by**
- determining an area (123) in the phase space (49) delimited by the course (45) or a vector (117, 119),
- determining the change (17) as a function of the area (123).

11. Method according to claim 9 or 10, **characterised by**
- pre-setting a threshold value (53) for the course (45),
- comparing the control signal (41) with the threshold value (53),
- detecting the object (3) as soon as the control signal (41) deviates so far from the course (45) that the threshold value (53) is exceeded.

12. Method according to one of the preceding claims, **characterised by**
- determining a current distance-dependent function occurring during the movement (19) of the measuring sensors (7, 11) along the article (1) and a change (17) of the current distance-dependent function as compared with the distance-dependent function,
- detecting the object (3) dependent upon the change (17) of the current distance-dependent function as compared with the distance-dependent function.

13. Method according to one of the preceding claims, **characterised by**
- storing the determined distance-dependent function,
- comparing the stored function with a current effect occurring during the movement (19) of the measuring sensors (7, 11) along the article (1) to determine the change (17),
- detecting the object (3) dependent upon the comparing.

14. Measuring arrangement (55) for detecting an object hidden behind an article (1), comprising:
- a first measuring sensor (7) to which a first alternating voltage (5) is appliable,
- a second measuring sensor (11) arranged adjacent to the first measuring sensor (7), to which a second alternating voltage (9) is appliable,
- an analysis apparatus (57) by means of which a distance-dependent measured value of an effect of the article (1) on at least one of the alternating voltages (5, 9) is determinable or at least storable, a change (17) of the distance-dependence of the distance-dependent measured value occurring during a movement (19) of the measuring sensors (7, 11) along the article (1) is determinable and the object (3) is detectable as a function of the change (17) in the distance-dependence of the measured value,
**characterized in that**, by means of the analysis device (57)
a distance-dependent function of the effect of the article (1) on at least one of the alternating voltages (5, 9) is determinable or at least storable as a measured value, the change (17) in the distance dependence of the distance-dependent function occurring during movement (19) of the measuring sensors (7, 11) is determinable and the object (3) is detectable as a function of the change (17) in the distance dependence of the function.

15. Measuring arrangement (55) according to claim 14, **characterised by**
- a circuit arrangement (59) comprising the measuring sensors (7, 11),
- a controller (43) connected upstream of the analysis apparatus (57) and downstream of the circuit arrangement (59) on the input side and connected in parallel on the output side of the circuit arrangement (59), wherein a regulating behaviour of the controller (43) for determining the function and/or the change (17) of the function is analysable by means of the analysis apparatus (57).

## Revendications

1. Procédé de détection d'un objet (3) caché derrière un autre objet (1), comportant les étapes suivantes :
- application d'une première tension alternative (5) à un premier dispositif de mesure (7),
- application d'une deuxième tension alternative (9) à un deuxième dispositif de mesure (11) disposé à proximité du premier dispositif de mesure (7),
- détermination d'une valeur de mesure, dépendante de l'éloignement, d'un effet de l'objet (1) sur l'une au moins des tensions alternatives (5, 9),
- détermination d'une variation (17) d'une dépendance à l'éloignement de la valeur de mesure survenant lors d'un déplacement (19) du dispositif de mesure (7, 11) le long de l'objet (1),
- détection de l'objet (3) en fonction de la variation (17) de la dépendance à l'éloignement de la valeur de mesure,
**caractérisé en ce que**
- une fonction, dépendante de l'éloignement, de l'effet de l'objet (1) sur au moins l'une des tensions alternatives (5, 9) est déterminée comme valeur de mesure,
- la variation (17) d'une dépendance à l'éloignement de la fonction, survenant lors du déplacement (19) du dispositif de mesure (7, 11) est déterminée,
- l'objet (3) est détecté en fonction de la variation (17) de la dépendance à l'éloignement de la fonction.

2. Procédé selon la revendication 1, **caractérisé par**
- la production d'une tension alternative de mesure (21),
- le filtrage de la tension alternative de mesure (21) au moyen d'un filtre (25) créant un déphasage (23) et par
- la production de la première tension alternative (5).

3. Procédé selon la revendication 2, **caractérisé par**
- l'application de la tension alternative de mesure (21) à un diviseur de tension de mesure (27),
- le prélèvement de la deuxième tension alternative (9) au niveau du diviseur de tension de mesure (27) en vue de l'application de la deuxième tension alternative (9) au deuxième dispositif de mesure (11).

4. Procédé selon la revendication 2 ou 3, **caractérisé en ce que** le filtre (25) présente une impédance faible ou différente par rapport au diviseur de tension de mesure (27).

5. Procédé selon l'une des revendications précédentes, **caractérisé par**
- la production d'une tension alternative de référence (29) déphasée de 180 degrés par rapport à la tension alternative de mesure (21),
- l'application de la tension alternative de référence (29) à une section de référence (31) disposée en parallèle avec l'un des dispositifs de mesure (7, 11).

6. Procédé selon la revendication 5, **caractérisé en ce qu'**une section de mesure (33), comportant les dispositifs de mesure (7, 11), le filtre (25) et le diviseur de tension de mesure (27), est branchée en parallèle avec la section de référence (31), la section de référence (29) étant réalisée de manière analogue à la section de mesure (33).

7. Procédé selon la revendication 6, **caractérisé par** l'ajout d'un signal de sortie de référence (35) de la section de référence (31) avec un signal de sortie de mesure primaire (37) de la section de mesure (33), à un signal de sortie de mesure secondaire (39).

8. Procédé selon la revendication 7, **caractérisé par**
- la prévision d'une valeur de consigne (40) pour le signal de sortie de mesure secondaire (39),
- l'action, sur le signal de sortie de mesure secondaire (39), en fonction de la valeur de consigne (40) au moyen d'un signal de réglage (41) d'un dispositif de réglage (43),
- l'exploitation du signal de réglage (41) pour déterminer la fonction dépendante de l'éloignement et la variation (17) de la fonction dépendante de l'éloignement.

9. Procédé selon la revendication 8, **caractérisé par**
- la détermination d'une évolution du signal de réglage (41) dépendant de l'éloignement (13) des dispositifs de mesure (7, 11) par rapport à l'objet (1) et/ou
- la détermination de l'évolution (45) sous la forme d'une analyse vectorielle (47) dans un espace de phases (49) du signal de réglage (41) et/ou
- la détermination de l'évolution (45) durant le rapprochement (51) des dispositifs de mesure (7, 11) de l'objet (1) avant une détection de l'objet (3).

10. Procédé selon la revendication 9, **caractérisé par**
- la détermination d'une surface (123) délimitée dans l'espace de phases (49) de l'évolution (45) ou d'un vecteur (117, 119),
- la détermination de la variation (17) en fonction de la surface (123).

11. Procédé selon la revendication 9 ou 10, **caractérisé par**
- la prévision d'une valeur seuil (53) pour l'évolution (45),
- la comparaison du signal de réglage (41) avec la valeur seuil (53),
- la détection de l'objet (3), dès que le signal de réglage (41) s'écarte tellement de l'évolution (45) que la valeur de seuil est dépassée.

12. Procédé selon l'une des revendications précédentes, **caractérisé par**
- la détermination d'une fonction courante, dépendante de l'éloignement, survenant lors du déplacement (19) des dispositifs de mesure (7, 11) le long de l'objet (1) et d'une variation (17) de la fonction courante, dépendante de l'éloignement, par rapport à la fonction dépendante de l'éloignement,
- la détection de l'objet (3) en fonction de la variation (17) de la fonction courante, dépendante de l'éloignement, par rapport à la fonction dépendante de l'éloignement.

13. Procédé selon l'une des revendications précédentes, **caractérisé par**
- l'enregistrement de la fonction dépendante de l'éloignement déterminée,
- la comparaison de la fonction enregistrée avec un effet courant survenant pendant le déplacement (19) des dispositifs de mesure (7, 11) le long de l'objet (1), en vue de la détermination de la variation (17),
- détection de l'objet (3) en fonction de la comparaison.

14. Dispositif de mesure (55) pour la détection d'un objet caché dernière un autre objet (1) comportant :
- un premier dispositif de mesure (7), auquel une première tension alternative (5) peut être appliquée ;
- un deuxième dispositif de mesure (11) disposé à proximité du premier dispositif de mesure (7), auquel une deuxième tension alternative peut être appliquée,
- un appareil d'analyse (57), au moyen duquel une valeur de mesure, dépendante de l'éloignement, d'un effet de l'objet (1) sur au moins l'une des tensions alternatives (5, 9) peut être déterminée ou au moins enregistrée, une variation (17) d'une dépendance à l'éloignement de la valeur de mesure dépendante de l'éloignement, survenant lors d'un déplacement (19) des dispositifs de mesure (7, 11) le long de l'objet (1) peut être déterminée et l'objet (3) peut être détecté en fonction de la variation (17) de la dépendance à l'éloignement de la valeur de mesure,
**caractérisé en ce que**, au moyen de l'appareil d'analyse (57), une fonction, dépendante de l'éloignement, de l'effet de l'objet (1) sur au moins l'une des tensions alternatives (5, 9) peut être déterminée en tant que valeur de mesure ou au moins être enregistrée, la variation (17) de la dépendance à l'éloignement, de la fonction dépendante de l'éloignement, survenant lors du déplacement (19) des dispositifs de mesure (7,11) peut être déterminée et l'objet (3) peut être détecté en fonction de la variation (17) de la dépendance à l'éloignement de la fonction.

15. Dispositif de mesure (55) selon la revendication 14, **caractérisé par**
- un circuit (59) comportant les dispositifs de mesure (7,11) ;
- un dispositif de réglage (43) monté en amont du dispositif d'analyse (57) ainsi qu'en aval du circuit (59) du côté de l'entrée et en parallèle du côté de la sortie, un comportement de réglage du dispositif de réglage (43) pouvant être analysé pour la détermination de la fonction et/ou de la variation (17) de la fonction au moyen de l'appareil d'analyse (57).
